# EUROPEAN PATENT APPLICATION

(11) **EP 4 815 059 A1**
(43) Date of publication of application: **30.09.2026**
(21) Application number: 24894199.9
(22) Date of filing: 21.11.2024
(51) Int. Cl.: H01M 4/52, H01M 10/054

(54) **NEGATIVE ELECTRODE ACTIVE MATERIAL AND SECONDARY BATTERY**

(30) Priority: 24.11.2023 JP 2023199016
(71) Applicant: Toda Kogyo Corp., Hiroshima 732-0828 (JP); National University Corporation Tottori University, Tottori-shi Tottori 680-8550 (JP)
(72) Inventor: WATANABE, Hiroyasu, Otake-shi, Hiroshima 739-0652 (JP); KUROKAWA, Haruki, Otake-shi, Hiroshima 739-0652 (JP); Usui, Hiroyuki, Tottori-shi, Tottori 680-8550 (JP); SAKAGUCHI, Hiroki, Tottori-shi, Tottori 680-8550 (JP); DOMI, Yasuhiro, Tottori-shi, Tottori 680-8550 (JP)
(74) Representative: Meissner Bolte Partnerschaft mbB
(86) International application number: PCT/JP2024/041274
(87) International publication number: WO 2025/110208

(57) **Abstract**

A negative electrode active material is composed of a sodium ferrite containing, as main components, Na and Fe, which are abundantly present as resources. With this negative electrode active material, the production cost of the negative electrode can be suppressed, and, when the positive electrode is for a sodium ion battery, metals such as Li are not used, so that a secondary battery with low environmental impact can be produced.

## Description

### Technical Field

The present invention relates to a negative electrode active material of a secondary battery. More specifically, the present invention relates to a negative electrode active material for a secondary battery, the negative electrode active material being capable of providing a secondary battery with low environmental impact upon disposal, because the negative electrode active material is a sodium ferrite containing, as main components, Na and Fe, which are abundantly present as resources, whereby the production cost of the negative electrode can be suppressed, and, when the positive electrode is for a sodium ion battery, metals such as Li are not used.

### Background Art

In recent years, reduction in size and weight of electronic devices such as mobile phones and personal computers has been accelerated, and there has been an increasing demand for secondary batteries having a high energy density as power supplies for driving these electronic devices.

Under such circumstances, attention has been focused on secondary batteries having a large charge-discharge capacity per weight and per volume and having high repeated charge-discharge characteristics.

In widely used secondary batteries, Li and Co are used as positive electrode active materials, and carbon-based materials such as graphite are used as negative electrode active materials.

However, Li and Co have problems in that the cost is high and the environmental impact for disposal is high.

In order to improve the characteristics of a secondary battery, improvement of each element constituting the secondary battery, namely, a positive electrode, a negative electrode, and an electrolyte, is required.

An object of the present invention is to provide a negative electrode active material that has high characteristics as a negative electrode active material, is composed of commonly available elements, and has low environmental impact.

### Citation List

### Patent Literature

PTL 1: Japanese Unexamined Patent Application Publication No. 2017-107844

### Summary of Invention

### Technical Problem

PTL 1 discloses that a compound composed of Li, Fe, and O is used as a negative electrode active material.

The negative electrode active material of PTL 1 improves the characteristics of a secondary battery, but has a problem in that Li is a rare metal and is expensive.

The inventors of the present invention have considered solving the above problems as a technical problem, and, as a result of repeated trial-and-error preparation and experimentation, succeeded in producing a sodium ferrite whose main components are Na and Fe. The inventors have found that, when the sodium ferrite is used as a negative electrode active material, the characteristics of a secondary battery can be improved, the manufacturing cost of the negative electrode can be suppressed because Na and Fe are commonly available elements, and, moreover, a negative electrode with low environmental impact upon disposal is provided, thereby solving the technical problem.

### Solution to Problem

The technical problem can be solved by the present invention as follows.

The present invention provides a negative electrode active material for a secondary battery, the negative electrode active material being composed of a sodium ferrite whose main components are Na and Fe.

The present invention also provides the negative electrode active material for a secondary battery, wherein the sodium ferrite is a sodium ferrite having one or a mixed phase of two or more selected from the following Group A.
Group A
A sodium ferrite having a crystal structure with a space group of R-3m
A sodium ferrite having a crystal structure with a space group of Pna21
A sodium ferrite having a crystal structure with a space group of P63/mmc

The present invention also provides a secondary battery including a negative electrode using the above negative electrode active material.

The present invention also provides the secondary battery, wherein the secondary battery is a sodium ion secondary battery.

### Advantageous Effects of Invention

The negative electrode active material according to the present invention is a sodium ferrite containing, as main components, Na and Fe, which are abundant as resources, and the use of a negative electrode containing the sodium ferrite as a negative electrode active material enables the production of a secondary battery having excellent discharge capacity.

Furthermore, when the sodium ferrite is a sodium ferrite having one or a mixed phase of two or more selected from a sodium ferrite having a crystal structure with a space group of R-3m (hereinafter, referred to as an "R-3m structure"), a sodium ferrite having a crystal structure with a space group of Pna21 (hereinafter, referred to as a "Pna21 structure"), and a sodium ferrite with a space group of P63/mmc (hereinafter, referred to as a "P63/mmc structure"), a secondary battery having more excellent discharge capacity can be produced.

Furthermore, when the secondary battery is a sodium ion battery, neither Li nor Co is used, and therefore, the secondary battery has low environmental impact upon disposal.

### Brief Description of Drawings

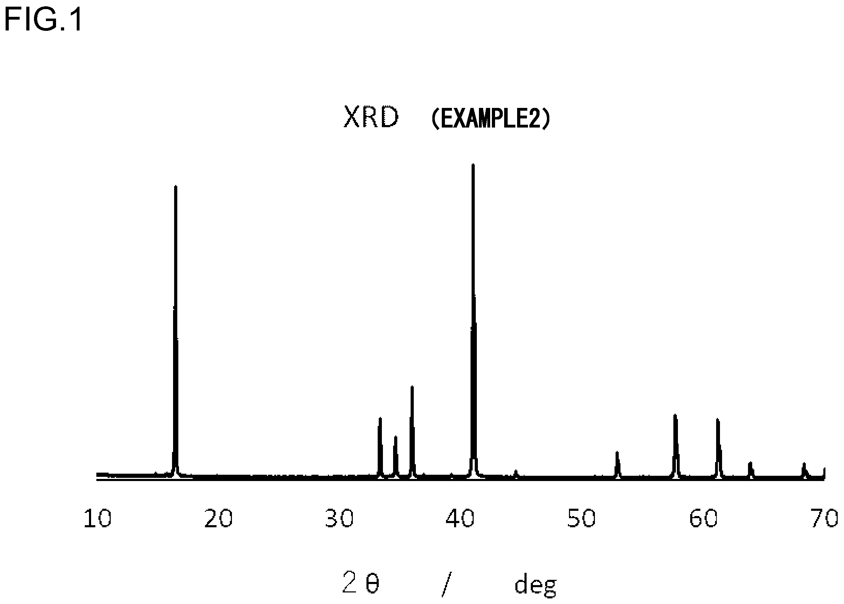

[Fig. 1] Fig. 1 is an X-ray diffraction pattern of a sodium ferrite of Example 2.

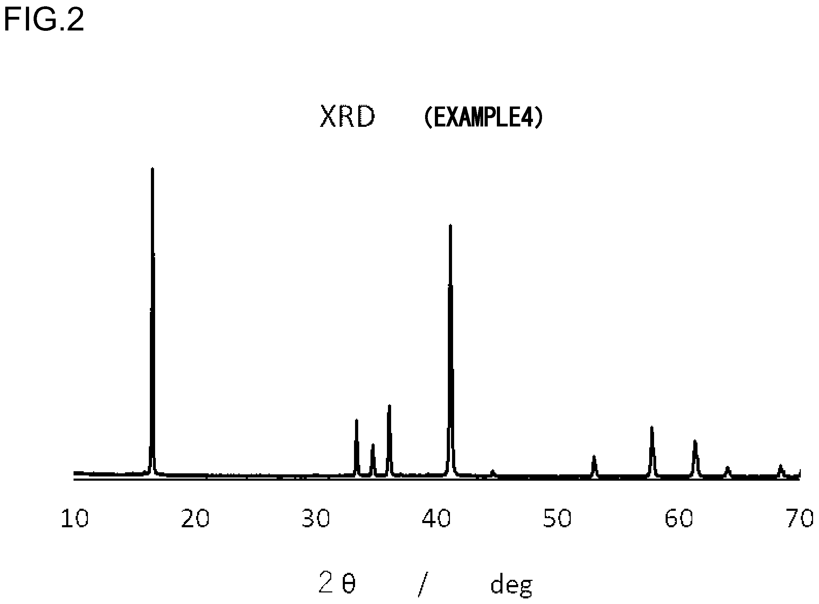

[Fig. 2] Fig. 2 is an X-ray diffraction pattern of a cobalt-containing sodium ferrite of Example 4.

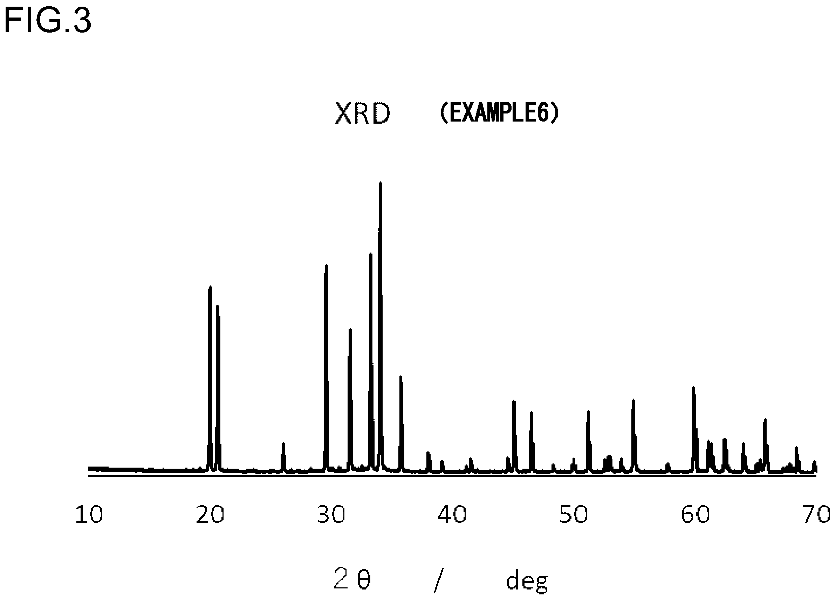

[Fig. 3] Fig. 3 is an X-ray diffraction pattern of a sodium ferrite of Example 6.

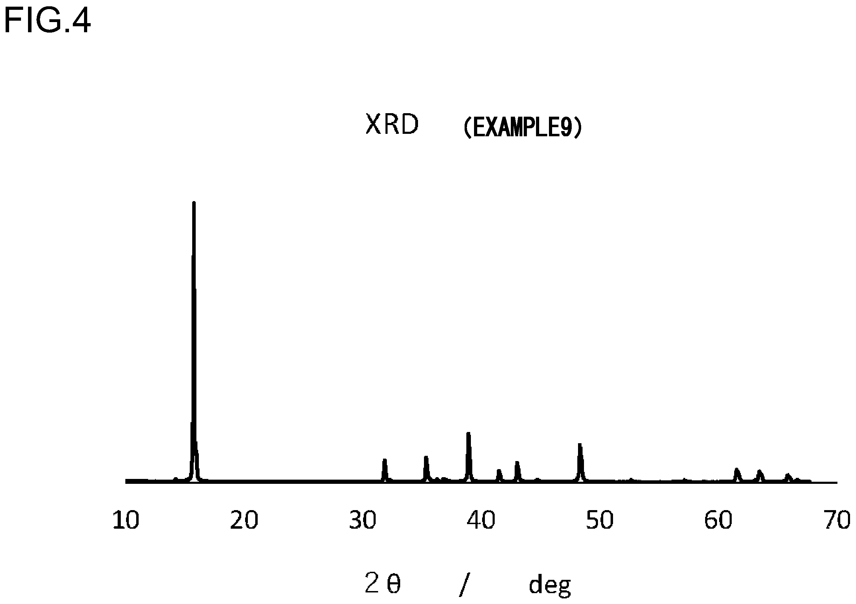

[Fig. 4] Fig. 4 is an X-ray diffraction pattern of a sodium ferrite of Example 9.

### Description of Embodiments

A negative electrode active material according to the present invention is a sodium ferrite whose main components are Na and Fe.

In the negative electrode active material having an R-3m structure or a Pna21 structure, the molar ratio of Na to Fe (Na/Fe) is preferably 0.8 to 1.1, more preferably 0.9 to 1.1. In the negative electrode active material having a P63/mmc structure, the molar ratio of Na to Fe (Na/Fe) is preferably 0.5 to 0.8, more preferably 0.6 to 0.7. In a case where a dissimilar metal element M such as Ni, Co, or Mn is contained, the molar ratio of Na/(Fe + M) is preferably 0.8 to 1.1 in the R-3m structure and the Pna21 structure, and the molar ratio of Na/(Fe + M) is preferably 0.5 to 0.8 in the P63/mmc structure.

In the negative electrode active material having an R-3m structure or a Pna21 structure, if the molar ratio of Na to Fe is less than 0.8 or more than 1.1, the discharge capacity may decrease. In the negative electrode active material having a P63/mmc structure, if the molar ratio of Na to Fe is less than 0.5, the discharge capacity may decrease, and if the molar ratio of Na to Fe is more than 0.8, the discharge capacity may decrease.

The negative electrode active material according to the present invention may contain a dissimilar metal such as Ni, Co, or Mn, in addition to the sodium ferrite whose main components are Na and Fe.

The content of the dissimilar metal is preferably 50 mol% or less relative to Fe.

If the content exceeds 50 mol%, the discharge capacity may decrease. The content of the dissimilar metal is more preferably 20 mol% or less relative to Fe.

The negative electrode active material according to the present invention preferably has an R-3m structure (α phase), a Pna21 structure (β phase), or a P63/mmc structure, or preferably has a mixed phase including two or more selected from the R-3m structure, the Pna21 structure, and the P63/mmc structure.

This is because a secondary battery having excellent discharge capacity can be produced.

The BET specific surface area value of the negative electrode active material according to the present invention is preferably 0.1 m²/g or more, more preferably 0.15 m²/g to 5.0 m²/g.

If the BET specific surface area value is less than 0.1 m²/g, the discharge capacity may decrease.

In a case where the negative electrode active material according to the present invention has an R-3m structure (α phase), the crystallite size is preferably 120 nm or less, more preferably 30 nm to 100 nm.

If the crystallite size exceeds 120 nm, the discharge capacity may decrease.

In a case of a Pna21 structure (β phase), the crystallite size is preferably 1,000 nm or less, more preferably 30 nm to 700 nm.

In a case of a P63/mmc structure, the crystallite size is preferably 180 nm or less, more preferably 30 nm to 170 nm.

In a case where the negative electrode active material according to the present invention has an R-3m structure (α phase), the a-axis length is preferably 0.301 nm to 0.303 nm, more preferably 0.3015 nm to 0.3025 nm.

If the a-axis length is less than 0.301 nm or longer than 0.303 nm, the discharge capacity may decrease.

In a case where the negative electrode active material according to the present invention has a Pna21 structure (β phase), the a-axis length is preferably 0.530 nm to 0.580 nm, more preferably 0.540 nm to 0.570 nm.

If the a-axis length is less than 0.530 nm or longer than 0.580 nm, the discharge capacity may decrease.

In a case where the negative electrode active material according to the present invention has a P63/mmc structure, the a-axis length is preferably 0.280 nm to 0.304 nm, more preferably 0.280 nm to 0.301 nm.

If the a-axis length is less than 0.280 nm or longer than 0.301 nm, the discharge capacity may decrease.

Next, a method for manufacturing the negative electrode active material according to the present invention will be described.

Examples of the method for manufacturing the sodium ferrite, which is the negative electrode active material according to the present invention, include, but are not particularly limited to, a solid-state method and a wet method, but manufacturing by the solid-state method is preferred.

Specifically, the sodium ferrite can be manufactured by mixing Na and Fe so as to obtain a predetermined molar ratio and firing the mixture at 150°C to 1,100°C. A more preferred firing temperature is 200°C to 1,050°C.

For example, in a case of manufacturing an R-3m structure and a Pna21 structure, Na and Fe are preferably mixed so that the molar ratio is 0.5 to 1.1.

The sodium ferrite may be manufactured by further performing annealing at 400°C to 1,000°C, as necessary.

The Fe raw material is preferably an iron oxide.

The iron oxide is not required to have a specific form such as FeOOH, Fe₂O₃, or Fe₃O₄, and an iron oxide in which part of Fe is replaced with another element may also be used.

Examples of the Na raw material include sodium hydroxide, sodium carbonate, sodium hydrogen carbonate, sodium nitrate, sodium nitrite, sodium oxalate, and sodium amide.

Next, a non-aqueous electrolyte secondary battery using a particle powder of the negative electrode active material according to the present invention will be described.

Although a sodium ion secondary battery will be described as an example of the non-aqueous electrolyte secondary battery, the non-aqueous electrolyte secondary battery is not limited thereto.

### (Positive Electrode)

A positive electrode is composed of a positive electrode active material, a current collector, a binder that binds the electrode active material to the current collector, and, as necessary, a conductive material.

The positive electrode active material is not particularly limited as long as sodium ions can be intercalated and deintercalated, but is preferably a sodium-containing transition metal composite oxide.

Examples of the sodium-containing transition metal composite oxide include, but are not particularly limited to, a sodium manganese composite oxide, a sodium iron composite oxide, a sodium nickel composite oxide, a sodium cobalt composite oxide, a sodium manganese titanium composite oxide, a sodium nickel titanium composite oxide, a sodium nickel manganese composite oxide, a sodium iron manganese composite oxide, a sodium iron phosphate compound, a sodium manganese phosphate compound, and a sodium cobalt phosphate compound.

It is known that the R-3m structure (α phase) according to the present invention can be used as a positive electrode active material.

Accordingly, a battery using the sodium ferrite according to the present invention for both the positive electrode active material and the negative electrode active material may be constructed.

### (Negative Electrode)

The method for producing the negative electrode is not particularly limited, but may be, for example, a slurry method.

In the slurry method, a binder, a solvent, and, as necessary, a conductive material such as a carbon material are added to a negative electrode active material and kneaded to prepare an electrode slurry, and the electrode slurry is applied onto a current collector and then dried, thereby producing the negative electrode.

The content of the negative electrode active material in the electrode slurry is preferably 40 wt% or more.

If the content is less than 40 wt%, the discharge capacity may decrease.

As the binder, it is possible to use a known fluorine-containing polymer such as a vinylidene fluoride polymer or a copolymer thereof, an acrylic acid polymer such as polyacrylic acid, a Na salt thereof, or a copolymer thereof, or a cellulose derivative such as carboxymethyl cellulose.

In the present invention, the negative electrode can also be produced by using a gas deposition method.

An example of the gas deposition method may be the technique described in Japanese Unexamined Patent Application Publication No. 2016-96016 (Fig. 13), etc.

### (Electrolyte Solution)

As an electrolyte solution, a non-aqueous electrolyte solution in which an electrolyte is dissolved in an organic solvent is used.

The organic solvent is not particularly limited and may be, for example, one solvent or a mixed solvent of two or more selected from cyclic carbonates, cyclic esters, and chain carbonates.

Examples of the cyclic carbonate include ethylene carbonate and propylene carbonate.

An example of the cyclic ester is γ-butyrolactone.

Examples of the chain carbonate include dimethyl carbonate and diethyl carbonate.

The electrolyte of the sodium ion secondary battery is not particularly limited, and may be, for example, one or more electrolytes selected from NaPF₆, NaBF₄, NaClO₄, NaAsF₆, NaCF₃SO₃, Na(CF₃SO₂)₂N, Na(C₂F₅SO₂)₂N, NaN(SO₂F)₂, and Na(CF₃SO₂)₃C.

The salt concentration of the electrolyte solution is suitably 0.5 mol/L to 3 mol/L.

Instead of the non-aqueous electrolyte solution, a gel polymer electrolyte containing an ionic liquid electrolyte solution or the non-aqueous electrolyte solution, or a solid polymer electrolyte obtained by incorporating the aforementioned electrolyte into a solid polymer electrolyte having sodium ion conductivity may be used.

Alternatively, instead of the non-aqueous electrolyte solution, a gel polymer electrolyte containing the non-aqueous electrolyte solution, or a solid polymer electrolyte obtained by incorporating the aforementioned electrolyte into a solid polymer electrolyte having sodium ion conductivity may be used.

In the present invention, a saturated cyclic carbonate having a fluoro group may be added to the electrolyte solution.

This is because cycle characteristics can be improved.

Examples of the saturated cyclic carbonate having a fluoro group include, but are not particularly limited to, fluoroethylene carbonate and difluoroethylene carbonate.

The proportion of the saturated cyclic carbonate having a fluoro group is preferably at least 1 vol%, more preferably 5 vol% to 30 vol% of the electrolyte solution.

### (Separator)

A microporous membrane or a nonwoven fabric can be used as a separator.

Examples of the compositions of the microporous membrane and the nonwoven fabric include, but are not particularly limited to, polyester polymers, polyolefin polymers, ether polymers, and glass fibers.

### (Method for Manufacturing Sodium Ion Secondary Battery)

A sodium ion secondary battery can be produced by using the negative electrode of the present invention.

The sodium ion secondary battery includes at least a positive electrode, a negative electrode, a separator that separates the positive electrode and the negative electrode, an electrolyte solution, and a battery container.

The method for manufacturing the sodium ion secondary battery in the present invention is not particularly limited, and the sodium ion secondary battery can be manufactured by using a known method.

An example of the method for manufacturing the sodium ion secondary battery may be a method in which a positive electrode and a negative electrode are stacked with a separator interposed therebetween to form a planar laminate or to form a wound body by winding the resulting laminate, the laminate or the wound body is accommodated in a metal or resin battery container and the battery container is sealed, an opening is then provided in the sealed portion and an electrolyte solution is injected, and the opening is sealed to produce the secondary battery.

### EXAMPLES

Examples of the present invention will be described below, but the present invention is not limited thereto.

### (BET Specific Surface Area)

The specific surface area value of each sample was measured by the BET method. A measurement apparatus used was a "specific surface area analyzer Macsorb" (manufactured by Mountech Co., Ltd.).

### (Composition: ICP)

The compositional ratio of each sample was measured, after the sample powder was completely dissolved, by using an inductively coupled plasma optical emission spectrometer (manufactured by Thermo Fisher Scientific Inc.).

### (Crystal Structure: XRD Measurement)

Layer identification was performed by using an X-ray diffractometer (D8 ADVANCE/manufactured by Bruker Japan K.K.), and the crystallite size and lattice constants (a-axis length, b-axis length, and c-axis length) of each sample were refined by Rietveld analysis.

### (Manufacturing of Negative Electrode)

A negative electrode was produced, using a gas deposition method, by depositing a sodium ferrite or sodium-containing iron oxide of Example on aluminum foil serving as a current collector.

The conditions of the gas deposition method are as follows.
Nozzle-to-substrate distance: 10 mm
Pressure difference: 5.0 × 10^5 Pa
Nozzle diameter: 0.5 mm in diameter
Carrier gas: He (6N)
Mask diameter: 10 mm
Amount of deposition: 20 µg to 50 µg

### (Production of Coin Cell)

The produced negative electrode, metallic sodium foil having a thickness of about 1 mm serving as a counter electrode, and a glass separator ND420 (manufactured by Asahi Kasei Corporation) serving as a separator were used, and an electrolyte solution was injected to produce a 2032-type coin cell.

As a salt of the electrolyte solution, sodium bis(fluorosulfonyl)amide (NaFSA) was used.

As a solvent of the electrolyte solution, N-propyl-N-methylpyrrolidinium/bis(fluorosulfonyl)amide (Py13-FSA) was used.

The concentration of the electrolyte solution was 1 M.

All of the operations of the production of the coin cell were performed in a glove box under an argon atmosphere having a dew point of -80°C or lower and an oxygen concentration of 1 ppm or less.

### (Charge-Discharge Measurement)

In the case of the sodium ion secondary battery, the measurement was performed at room temperature in a potential range of 0.005 V to 2.800 V (vs. Na/Na⁺) at a current density of 50 mA/g relative to the amount of negative electrode active material.

### <Method for Manufacturing Sodium Ferrite Particle Powder and Measurement>

### (EXAMPLE 1)

Fe₃O₄ was used as the Fe raw material.

With respect to 10 parts by weight of Fe₃O₄, a sodium hydroxide particle powder serving as the Na raw material was weighed so that Na/Fe = 0.95 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder of Example 1.

The BET specific surface area of the sodium ferrite particle powder of Example 1 was 2.0 m²/g.

The peaks observed by the XRD measurement were peaks attributable to R-3m (α phase).

Elements contained in the obtained sodium ferrite particle powder were analyzed by ICP. The Na/Fe molar ratio was 0.94, and it was confirmed to be substantially equivalent to the charging ratio of the raw materials.

The obtained sodium ferrite particles were deposited on aluminum foil by the gas deposition method to produce a negative electrode.

A coin cell was assembled with the glass separator using the produced negative electrode, the metallic sodium as the positive electrode, and 1 M NaFSA/Py13-FSA adjusted to a concentration of 1 M as the electrolyte and the electrolyte solution.

Charge-discharge measurement was performed under measurement conditions of constant current (hereinafter, referred to as "CC") charging and CC discharging, with the battery placed in an incubator controlled at 30°C, at a current density of 50 mA/g relative to the amount of negative electrode active material and in a potential range of 0.005 V to 2.800 V (vs. Na/Na⁺).

### (EXAMPLE 2)

The same Fe₃O₄ as in Example 1 was used as the Fe raw material.

With respect to 10 parts by weight of Fe₃O₄, a sodium hydroxide particle powder serving as the Na raw material was weighed so that Na/Fe = 1.06 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder.

The obtained sodium ferrite particle powder was further annealed at 600°C for eight hours, and, after cooling, pulverized with a sample mill to obtain a sodium ferrite particle powder of Example 2.

The value obtained by measuring the Na/Fe molar ratio in the sodium ferrite particle powder of Example 2 by ICP was 1.06, and, as in Example 1, it was confirmed to be substantially equivalent to the charging ratio of the raw materials.

The BET specific surface area of the sodium ferrite particle powder of Example 2 was 0.2 m²/g.

The peaks observed by the XRD measurement were peaks attributable to R-3m (α phase).

### (EXAMPLE 3)

An iron(II) sulfate solution and nickel sulfate were adjusted so that Ni/(Ni + Fe) was 2 mol% and then subjected to a neutralization reaction with a sodium hydroxide solution until Na/(Ni + Fe) = 1.00. Air was supplied to the mixed solution to cause oxidation, thereby obtaining nickel-containing iron oxide, which was used as the Fe raw material.

With respect to 10 parts by weight of the nickel-containing iron oxide, a sodium hydroxide particle powder serving as the Na raw material was weighed so that Na/(Ni + Fe) = 0.95 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a nickel-containing sodium ferrite particle powder.

The obtained nickel-containing sodium ferrite particle powder was further annealed at 600°C for eight hours, and, after cooling, pulverized with a sample mill to obtain a nickel-containing sodium ferrite particle powder of Example 3.

The value obtained by measuring the molar ratio of Na/(Ni + Fe) in the nickel-containing sodium ferrite particle powder of Example 3 by ICP was 0.94.

The BET specific surface area of the sodium ferrite particle powder of Example 3 was 0.7 m²/g.

The peaks observed by the XRD measurement were peaks attributable to R-3m (α phase).

### (EXAMPLE 4)

An iron(II) sulfate solution and cobalt sulfate were adjusted so that Co/(Co + Fe) was 4 mol% and then subjected to a neutralization reaction with a sodium hydroxide solution until Na/(Co + Fe) = 1.00. Air was supplied to the mixed solution to cause oxidation, thereby obtaining cobalt-containing iron oxide, which was used as the Fe raw material.

With respect to 10 parts by weight of the cobalt-containing iron oxide, a sodium hydroxide particle powder serving as the Na raw material was weighed so that Na/(Co + Fe) = 0.95 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a cobalt-containing sodium ferrite particle powder.

The obtained cobalt-containing sodium ferrite particle powder was further annealed at 600°C for eight hours, and, after cooling, pulverized with a sample mill to obtain a cobalt-containing sodium ferrite particle powder of Example 4.

The value obtained by measuring the molar ratio of Na/(Co + Fe) in the cobalt-containing sodium ferrite particle powder of Example 4 by ICP was 0.92.

The BET specific surface area of the sodium ferrite particle powder of Example 4 was 1.2 m²/g.

The peaks observed by the XRD measurement were peaks attributable to R-3m (α phase).

### (EXAMPLE 5)

An iron(II) sulfate solution and manganese sulfate were adjusted so that Mn/(Mn + Fe) was 6 mol% and then subjected to a neutralization reaction with a sodium hydroxide solution until Na/(Mn + Fe) = 1.00. Air was supplied to the mixed solution to cause oxidation, thereby obtaining manganese-containing iron oxide, which was used as the Fe raw material.

With respect to 10 parts by weight of the manganese-containing iron oxide, a sodium hydroxide particle powder serving as the Na raw material was weighed so that Na/(Mn + Fe) = 0.95 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a manganese-containing sodium ferrite particle powder.

The obtained manganese-containing sodium ferrite particle powder was further annealed at 600°C for eight hours, and, after cooling, pulverized with a sample mill to obtain a manganese-containing sodium ferrite particle powder of Example 5.

The value obtained by measuring the molar ratio of Na/(Mn + Fe) in the manganese-containing sodium ferrite particle powder of Example 5 by ICP was 0.94.

The BET specific surface area of the manganese-containing sodium ferrite particle powder of Example 5 was 2.9 m²/g.

The peaks observed by the XRD measurement were peaks attributable to R-3m (α phase).

### (EXAMPLE 6)

The same Fe₃O₄ as in Example 1 was used as the Fe raw material.

With respect to 10 parts by weight of Fe₃O₄, a sodium hydroxide particle powder serving as the Na raw material was weighed so that Na/Fe = 1.00 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder.

The obtained sodium ferrite particle powder was further annealed at 980°C for eight hours, and, after cooling, pulverized with a sample mill to obtain a sodium ferrite particle powder of Example 6.

The value obtained by measuring the molar ratio of Na/Fe in the sodium ferrite particle powder of Example 6 by ICP was 1.00.

The BET specific surface area of the sodium ferrite particle powder of Example 6 was 0.1 m²/g.

The peaks observed by the XRD measurement were peaks attributable to Pna21 (β phase).

### (EXAMPLE 7)

The same Fe₃O₄ as in Example 1 was used as the Fe raw material.

With respect to 10 parts by weight of Fe₃O₄, a sodium hydroxide particle powder serving as the Na raw material was weighed so that Na/Fe = 1.06 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder.

The obtained sodium ferrite particle powder was further annealed at 980°C for eight hours, and, after cooling, pulverized with a sample mill to obtain a sodium ferrite particle powder of Example 7.

The value obtained by measuring the molar ratio of Na/Fe in the sodium ferrite particle powder of Example 7 by ICP was 1.06.

The BET specific surface area of the sodium ferrite particle powder of Example 7 was 0.1 m²/g.

The peaks observed by the XRD measurement were peaks attributable to Pna21 (β phase).

### (EXAMPLE 8)

The same Fe₃O₄ as in Example 1 was used as the Fe raw material.

With respect to 10 parts by weight of Fe₃O₄, a sodium carbonate particle powder serving as the Na raw material was weighed so that Na/Fe = 1.03 (molar ratio).

The raw materials were mixed and pulverized with a sample mill, and the mixed pulverized product was placed in a crucible and subjected to a solid-state reaction at 700°C for four hours. Subsequently, the product was cooled to room temperature and pulverized with a sample mill to obtain a sodium ferrite particle powder.

The obtained sodium ferrite particle powder was further annealed at 900°C for eight hours, and, after cooling, pulverized with a sample mill to obtain a sodium ferrite particle powder of Example 8.

The value obtained by measuring the molar ratio of Na/Fe in the sodium ferrite particle powder of Example 8 by ICP was 1.03.

The BET specific surface area of the sodium ferrite particle powder obtained in Example 8 was 1.8 m²/g.

The peaks observed by the XRD measurement were peaks attributable to Pna21 (β phase).

### (EXAMPLE 9)

Manganese-containing iron oxide was obtained in the same manner as in Example 5 except that Mn/(Mn + Fe) was 50 mol%, and was used as the Fe raw material.

With respect to 10 parts by weight of the manganese-containing iron oxide, a sodium hydroxide particle powder serving as the Na raw material was weighed so that Na/(Mn + Fe) = 0.66 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a manganese-containing sodium ferrite particle powder.

The obtained manganese-containing sodium ferrite particle powder was further annealed at 950°C for eight hours, and, after cooling, pulverized with a sample mill to obtain a manganese-containing sodium ferrite particle powder of Example 8.

The value obtained by measuring the molar ratio of Na/(Mn + Fe) in the manganese-containing sodium ferrite particle powder of Example 9 by ICP was 0.66.

The BET specific surface area of the sodium ferrite particle powder of Example 9 was 1.1 m²/g.

The peaks observed by the XRD measurement were peaks attributable to P63/mmc.

### (EXAMPLE 10)

An iron(II) sulfate solution, manganese sulfate, and cobalt sulfate were mixed and adjusted so that Mn/(Mn + Co + Fe) was 40 mol% and Co/(Mn + Co + Fe) was 10 mol%, and then subjected to a neutralization reaction with a sodium hydroxide solution until Na/(Ni + Co + Fe) = 1.00. Air was supplied to the mixed solution to cause oxidation, thereby obtaining manganese-cobalt-containing iron oxide, which was used as the Fe raw material.

With respect to 10 parts by weight of the manganese-cobalt-containing iron oxide, a sodium hydroxide particle powder serving as the Na raw material was weighed so that Na/(Mn + Co + Fe) = 0.66 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder.

The obtained sodium ferrite particle powder was further annealed at 950°C for eight hours, and, after cooling, pulverized with a sample mill to obtain a sodium ferrite particle powder of Example 10.

The value obtained by measuring the molar ratio of Na/(Mn + Co + Fe) in the sodium ferrite particle powder of Example 10 by ICP was 0.66.

The BET specific surface area of the sodium ferrite particle powder of Example 10 was 1.4 m²/g.

The peaks observed by the XRD measurement were peaks attributable to P63/mmc.

### (EXAMPLE 11)

An iron(II) sulfate solution, nickel sulfate, and manganese sulfate were mixed and adjusted so that Ni/(Ni + Mn + Fe) was 10 mol% and Mn/(Ni + Mn + Fe) was 40 mol%, and then subjected to a neutralization reaction with a sodium hydroxide solution until Na/(Ni + Mn + Fe) = 1.00. Air was supplied to the mixed solution to cause oxidation, thereby obtaining nickel-manganese-containing iron oxide, which was used as the Fe raw material.

With respect to 10 parts by weight of the nickel-manganese-containing iron oxide, a sodium hydroxide particle powder serving as the Na raw material was weighed so that Na/(Ni + Mn + Fe) = 0.66 (molar ratio).

The raw materials were mixed and pulverized with a sample mill, and the mixed pulverized product was placed in a crucible and subjected to a solid-state reaction at 400°C for eight hours. Subsequently, the product was cooled to room temperature and pulverized with a sample mill to obtain a sodium ferrite particle powder.

The obtained sodium ferrite particle powder was further annealed at 950°C for eight hours, and, after cooling, pulverized with a sample mill to obtain a sodium ferrite particle powder of Example 10.

The value obtained by measuring the molar ratio of Na/(Ni + Mn + Fe) in the sodium ferrite particle powder of Example 11 by ICP was 0.66.

The BET specific surface area of the sodium ferrite particle powder of Example 11 was 1.6 m²/g.

The peaks observed by the XRD measurement indicated a mixed phase containing P63/mmc.

Table 1 shows the composition, synthesis conditions, and characteristics of the sodium ferrite of each Example.

**[Table 1]**

| Example | Amount of additive (mol%) | | | Synthesis conditions | | Characteristics of sodium ferrite | | | | | | | | Charge-discharge measurement |
|---|---|---|---|---|---|---|---|---|---|---|---|---|---|---|
| | Ni | Co | Mn | Heat treatment (1) | Heat treatment (2) | Crystal structure | | Na/Fe ratio | BET (m²/g) | Crystallite size (nm) | a-Axis length (nm) | b-Axis length (nm) | c-Axis length (nm) | Initial capacity (mAh/g) |
| 1 | - | - | - | 400 | - | R-3m | α-NaFeO2 | 0.94 | 2.0 | 91 | 0.302 | 0.302 | 1.610 | 368 |
| 2 | - | - | - | 400 | 600 | R-3m | α-NaFeO2 | 1.06 | 0.2 | 92 | 0.301 | 0.301 | 1.609 | 250 |
| 3 | 2 | - | - | 400 | 600 | R-3m | α-NaFeO2 | 0.94 | 0.7 | 91 | 0.302 | 0.302 | 1.606 | 258 |
| 4 | - | 4 | - | 400 | 600 | R-3m | α-NaFeO2 | 0.92 | 1.2 | 53 | 0.302 | 0.302 | 1.607 | 283 |
| 5 | - | - | 6 | 400 | 600 | R-3m | α-NaFeO2 | 0.94 | 2.9 | 48 | 0.302 | 0.302 | 1.612 | 363 |
| 6 | - | - | - | 400 | 980 | Pna21 | β-NaFeO2 | 1.00 | 0.1 | 646 | 0.567 | 0.714 | 0.538 | 225 |
| 7 | - | - | - | 400 | 980 | Pna21 | β-NaFeO2 | 1.06 | 0.1 | 963 | 0.567 | 0.714 | 0.538 | 287 |
| 8 | - | - | - | 700 | 900 | Pna21 | β-NaFeO2 | 1.03 | 1.8 | 199 | 0.569 | 0.714 | 0.538 | 559 |
| 9 | - | - | 50 | 400 | 950 | P63/mmc | | 0.66 | 1.1 | 149 | 0.293 | 0.293 | 1.123 | 251 |
| 10 | - | 10 | 40 | 400 | 950 | P63/mmc | | 0.66 | 1.4 | 149 | 0.291 | 0.291 | 1.122 | 219 |

For all of the powders of Examples 2 to 10, electrodes were produced in the same manner as in Example 1, and charge-discharge measurement was performed under the same conditions. Charging and discharging were confirmed in sodium ion secondary batteries using all of the sodium ferrite powders for the negative electrodes. Since the sodium ferrite particle powder obtained in Example 11 also has a large BET specific surface area of 1.6 m²/g, the sodium ferrite particle powder can be expected to have a high initial capacity when formed into a secondary battery.

### Industrial Applicability

The negative electrode active material according to the present invention is a negative electrode active material for a secondary battery, the negative electrode active material being capable of providing a secondary battery with low environmental impact upon disposal, because the negative electrode active material is a sodium ferrite containing, as main components, Na and Fe, which are abundantly present as resources, whereby the production cost of the negative electrode can be suppressed, and, when the positive electrode is for a sodium ion battery, metals such as Li are not used.

Accordingly, the industrial applicability of the present invention is high.

## Claims

1. A negative electrode active material for a secondary battery, comprising a sodium ferrite whose main components are Na and Fe.

2. The negative electrode active material for a secondary battery according to claim 1, wherein the sodium ferrite is a sodium ferrite having one or a mixed phase of two or more selected from the following Group A:
Group A
a sodium ferrite having a crystal structure with a space group of R-3m
a sodium ferrite having a crystal structure with a space group of Pna21
a sodium ferrite having a crystal structure with a space group of P63/mmc.

3. A secondary battery comprising a negative electrode using the negative electrode active material according to claim 1 or 2.

4. The secondary battery according to claim 3, wherein the secondary battery is a sodium ion secondary battery.
